(19) Europäisches Patentamt
European Patent Office
Office européen des brevets

(11) **EP 3 380 558 B1**

(12) **EUROPEAN PATENT SPECIFICATION**

(45) Date of publication and mention
of the grant of the patent:
**28.08.2019 Bulletin 2019/35**

(51) Int Cl.:
*C08L 23/08* (2006.01)       *C08K 3/04* (2006.01)
*H01B 3/44* (2006.01)       *H01B 9/02* (2006.01)

(21) Application number: **16798459.0**

(22) Date of filing: **16.11.2016**

(86) International application number:
**PCT/EP2016/077877**

(87) International publication number:
**WO 2017/089201 (01.06.2017 Gazette 2017/22)**

(54) **SEMICONDUCTIVE POLYETHYLENE COMPOSITION**

HALBLEITENDE POLYETHYLENZUSAMMENSETZUNG

COMPOSITION DE POLYÉTHYLÈNE SEMICONDUCTRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.11.2015 EP 15196732**

(43) Date of publication of application:
**03.10.2018 Bulletin 2018/40**

(73) Proprietor: **Borealis AG**
**1220 Vienna (AT)**

(72) Inventors:
• **SKOGMAN, Fredrik**
**44440 Stenungsund (SE)**

• **SMEDBERG, Annika**
**47161 Myggenäs (SE)**
• **THORN, Niklas**
**44430 Stenungsund (SE)**

(74) Representative: **Maiwald Patent- und
Rechtsanwaltsgesellschaft mbH
Elisenhof
Elisenstraße 3
80335 München (DE)**

(56) References cited:
**EP-A1- 1 634 913      EP-A1- 1 916 673
EP-A2- 0 334 993**

**Description**

**Field of Invention**

The invention relates to semiconductive polyethylene composition, for use in power cables, with improved processability compared to other similar semiconductive polymer compositions. This invention relates to a cable with a layer comprising the semiconductive polyethylene composition.

**Background of invention**

In wire and cable applications a typical cable comprises at least one conductor surrounded by one or more layers of polymeric materials. In power cables, including medium voltage (MV), high voltage (HV) and extra high voltage (EHV), said conductor is surrounded by several layers including an inner semiconductive layer, an insulation layer and an outer semiconductive layer, in that order. The cables are commonly produced by extruding the layers on a conductor. Such polymeric semiconductive layers are well known and widely used in dielectric power cables rated for voltages greater than 1 kilo Volt. These layers are used to provide layers of intermediate resistivity between the conductor and the insulation, and between the insulation and the ground or neutral potential.

The purpose of a semiconductive layer is to prolong the service life, i.e. long term viability, of a power cable i.a. by preventing partial discharge at the interface of conductive and dielectric layers. Surface smoothness of the extruded semiconductive layer is a property that plays an important role in prolonging the service life of the cable. The smoothness is influenced i.a. by the carbon black as well as the polymer composition. It is well know that the carbon black needs to be carefully selected in combination with the polymers.

For semiconducting cables is it known to use plastomers in the polymer fraction. The plastomer has been added to improve various properties and can be seen as an additive if added in an amount of less than 10 wt% of the semiconductive polyethylene compositions.

Due to the narrow Molecular Weight Distribution (MWD) of plastomers and the high loading of carbon black, processability is of highest importance. One aspect of the invention is to improve the processability of the semiconductive polyethylene composition by carefully designing the plastomer blend.

Better processability will give higher output for cable extruders. The semiconducting compositions have the lowest processability of all polymer compositions used in the various cable layers. Thus, it is important to improve the processability of the semiconductive polyethylene composition.

Another aspect of the invention is reduced risk for scorch (premature crosslinking in cable extruder) due milder extrusion condition of the semiconductive polyethylene composition during cable extrusion. This means for example that cable campaigns can be longer and consequently less cleaning of cable extruder is needed. Another advantage is larger processing window leading to a more stable process in general.

Another advantage due to the improved processability is less shear in compounding extruder and lower pressure in the cable extruder of the semiconducting material. This is highly important since high pressures can lead to degradation of semiconducting properties.

Gels are high molecular fractions formed in the polymer during polymerisation. Mostly gels will not melt out during compounding.

Conventional semiconductive polyethylene compositions typically comprise ethylene polar copolymer and nitrile resins. These resins conventionally comprise in practice no gels.

The dispersion of conductive additive, preferably carbon black, in the polymer component is a critical requirement. A poor carbon black dispersion or presence of foreign particles can cause negative impact on electrical properties. Hence, it is critical that proper dispersion of the carbon black is achieved during compounding to ensure good electrical performance.

It is a well-known fact in the wire & cable industry, that smoothness of the extruded layers of semiconductive polyethylene compositions are playing a critical role in the expected service life of power cables. The smoothness parameter becomes most critical at the interface between the inner semiconductive polyethylene compositions and the insulation since protruding semicon extending into the insulation bulk will generate local electrical field enhancements that may ultimately lead to pre-mature cable failure e.g. electrical breakdown.

With this background, the requirements and specifications of the frequency and size distribution of protrusions are becoming more and more stringent with increased voltage ratings. To further develop semiconductive polyethylene compositions targeting extra high voltage ratings, especially DC, it is desired to further improve the smoothness of the semiconductive layer, especially the inner semiconductive layer in which the electrical stress is the highest.

Conventional semiconductive materials are based on ethylene-acrylates and ethylene-acetates polymers. Not many semiconductive materials are based on plastomer resins. The plastomer is interesting for DC semiconductive composition, typically HVDC.

It is known that the space charge performance of cables can be influenced by the selection of the components in the semiconductive material. Space charge is an accumulation of electrical charges (electrons, holes and ions) inside the insulation leading to electrical field distortion. They emanate from components inside the insulation or from injection of electrons from the semiconductive layers. Space charges trapped in high voltage insulation systems (i.e. polymeric power cables) can significantly alter the internal electrical field distribution, possibly leading to premature failure of the system at stresses well below anticipated or design values. It is known that plastomer based semiconducting compositions gives good space charge properties in a cable.

EP1634913 and EP1978040 disclose multimodal ethylene homo- or copolymer, produced in a polymerisation process comprising a single site catalyst. The polymers disclosed are Engage from DOW and one example manufactured in a Borstar technology. The invention is semiconductive polymer that gives excellent space charge properties in a cable and good processability.

US5556697 discloses a smooth semiconductive polyethylene composition. The expression smooth has the meaning of a Surface smoothness analysis value in the range -10 for SSA>0.150/m$^2$.

EP2532011 discloses semiconductive shield composition with a linear, single-site catalysed polymer and an LDPE. The examples of linear, single-site catalysed polymer comprise Engage materials.

It is an object of the invention to improve the processability of the semiconductive layer. Another object of the invention is to make a semiconductive polyethylene composition that gives excellent space charge performance to ensure good DC properties in a cable. A further aspect is to improve smoothness of semiconductive polyethylene composition.

One aspect of the invention is a semiconducting polyethylene composition that is based on a plastomer, i.e. the main component is the plastomer.

## Description of the invention

The invention relates to a semiconductive polyethylene composition comprising

    a. a plastomer,
    b. an amount of at least 20 wt% of carbon black,

wherein the plastomer comprises:

    i. a first plastomer fraction with density in the range of 885 to 920 kg/m$^3$ and MFR$_2$ in the range of 15 to 50 g/10min,
    ii. a second plastomer fraction with density in the range of 840 to 880 kg/m$^3$ and MFR$_2$ in the range of 0.5 to 10 g/10min,

and the amounts of the first and second fraction of plastomer are present in an amount of at least 10 wt% of the plastomer.

Plastomer means herein a very low density polyolefin, more preferably very low density polyolefin polymerised using a single site catalyst, suitably a metallocene catalysis. Typically, the polyolefin plastomer are ethylene copolymers, suitably alfa-olefin, most suitably 1-octene. These plastomers have a density of less than or equal to 910 kg/m$^3$, more suitably less than or equal to 905 kg/m3. The density usually is above 860 kg/m$^3$, more suitably above 880 kg/m$^3$ It is an essential part of the invention that the density is less than or equal to 910kg/m$^3$, since increased density will impair distribution of carbon black. A poor distribution will deteriorate smoothness.

Semiconductive means that the semiconductive polyethylene composition can be used in a semiconductive layer in a power cable, thus the carbon black is added in an amount of at least 20 wt% based on the semiconductive polyethylene composition.

The expression plastomer means that the plastomer consist of a mechanical blend of at least two fractions of plastomer or an insitu blend of plastomers.

It has surprisingly been found that the processability of the semiconductive polyethylene composition is improved when a plastomer with high density and high MFR$_2$ is blended together with a plastomer with low density and low MFR$_2$ compared to when a plastomer with low density and high MFR$_2$ is blended together with a plastomer with high density and low MFR$_2$. This is shown in Table 1 & 4 as decreased melt pressure in the extruder.

Due to the narrow MWD of plastomers and the high loading of carbon black is processability of highest importance. One aspect of the invention is to improve the processability of the semiconductive polyethylene composition by carefully designing the plastomer blend.

## The invention in detail

In an even more suitable embodiment the plastomer comprises:

a. a first plastomer fraction with density of 890 to 910 kg/m³ and MFR₂ in the range of 20 to 40 g/ 10min,

b. a second plastomer fraction with density of 860 to 875 kg/m³ and MFR₂ in the range of 0.5 to5 g/10min,

and the amounts of the first and second fraction of plastomer are present in an amount of at least 10 wt% of the plastomer.

The amounts of the first and second fraction of plastomer are present in an amount of at least 10 wt% of the plastomer. The amount of the first plastomer fraction with high density and high MFR₂ is suitably present in an amount of 50 to 90 wt% of the plastomer, more suitably 70 to 90 wt%. The amount of the second plastomer fraction with low density and low MFR₂ is suitably present in an amount of 10 to 50 wt% of the plastomer, more suitably 10 to 30 wt%. The MFR₂ of the plastomer suitably is 1 to 30 g/10min, more suitably 5 to 25 g/10min.

To calculate the MFR₂ of the plastomer blend the log-additivity rule shall be used.

$$\log F = \sum w_i \log F_i$$

where $w_i$ is the weight percentage of the fraction i and $F_i$ is MFR₂ of fraction i.

In one embodiment of the invention the plastomer suitably is a blend of at least two fractions of plastomers, suitably two fractions. The plastomer blend can be a mechanical blend or an insitu blend as in WO 92/12182. The plastomer blend suitably is a mechanical blend. It is an essential part of the invention that the density of the plastomer blend is below 910 kg/m³.

The density is either measured directly on the plastomer or is the density measured on each fraction and summarised based on each plastomer weight fraction.

In one embodiment of the invention the amount of plastomer in the semiconductive polyethylene composition is from 40 to 75 wt% of the semiconductive polyethylene composition, suitably from 50 to 70 wt% and most suitably from 55 to 70 wt%. The plastomer that gives very good space charge properties in a cable and by increasing the amount of plastomer will the space charge properties of a cable be improved as described in EP 1634913. This improves the DC properties of the semiconductive polyethylene composition.

One embodiment of the invention is the semiconductive polyethylene composition comprises an ethylene polar copolymer.

The polar ethylene copolymer contributes to better dispersion of the carbon black, increase adhesion and improve processability. It further has minor effect to improve space charge performance in a cable.

The ethylene polar copolymer has comonomers with polar groups. Examples of polar comonomers are: (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maelic acid and fumaric acid, (d) (meth)acrylic acid derivatives, such as (meth)acrylonitrile and (meth)acrylic amide, and (e) vinyl ethers, such as vinyl methyl ether and vinyl phenyl ether. The ethylene polar copolymer is produced by a highpressure polymerisation with free radical initiation.

Suitable comonomers are vinyl esters of monocarboxylic acids having 1 to 4 carbon atoms, such as vinyl acetate (EVA), and (meth)acrylates of alcohols having 1 to 4 carbon atoms, such as methyl (meth)acrylate (EMA & EMMA). Especially suitable comonomers are butyl acrylate (EBA), ethyl acrylate (EEA) and methyl acrylate (EMA). Two or more such olefinically unsaturated compounds may be used in combination. The term "(meth)acrylic acid" is intended to embrace both acrylic acid and methacrylic acid.

The amount of polar group containing comonomer units in the ethylene polar copolymer is from 5 to 40 wt%, in suitably from 10 to 30 wt%, and yet more suitably from 10 to 25 wt%.

In a suitable embodiment the total amount of polar comonomers in the ethylene polar copolymer is from 1 wt% to 20 wt%, suitably 5 wt% to 15 wt%.

The ethylene polar copolymer suitably has an MFR₂ in the range of 5 to 50 g/lOmin, more suitably in the range of 5 to 30 g/10min, and even more suitable in the range of 5 to 20 g/10min.

The semiconductive polyethylene composition comprises the plastomer and the ethylene polar copolymer. In one embodiment of the invention the ratio of the MFR₂ of the plastomer and the ethylene polar copolymer is from 0.5 to 4, suitably from 1 to 4. In a more suitable embodiment the MFR₂ of the plastomer and the ethylene polar copolymer differ less than 15 g/10min, suitably less than 10 g/10min.

The semiconductive polyethylene composition comprises an amount of at least 20 wt% of carbon black. The amount of carbon black shall be sufficient that the semiconductive polyethylene composition can be used in a semiconductive layer in a power cable. The amount of carbon black in the semiconductive polyethylene composition is suitably from 20 to 45 wt%, even more suitable from 25 to 40 wt%, and most suitably from 30 to 35 wt%. One advantage of the invention is that the amount of carbon black can be reduced compared to conventional semiconductive polyethylene compositions.

The choice of carbon black amount is important since space charge properties and processability are improved with decreasing amount of carbon black.

Therefore, it is suitable to use carbon blacks containing ash in an amount of 100 ppm or less, and sulphur in an amount of 100 ppm or less. More suitable acetylene carbon black is used, because it gives not only a better surface smoothness, but also better space charge properties compared to furnace black.

Acetylene carbon blacks are produced in an acetylene black process by reaction of acetylene and unsaturated hydrocarbons, e.g. as described in US 4,340,577. Suitable acetylene blacks have a particle size of larger than 20 nm, more suitable 20 to 80 nm. The mean primary particle size is defined as the number average particle diameter according to the ASTM D3849-95 a. Typically acetylene blacks of this category have an iodine number between 30 to 300 mg/g, suitable 30 to 150 mg/g according to ASTM D1510. It is further suitable that the oil absorption number is between 80 to 300 ml/100 g, more preferably 100 to 280 ml/100 g and this is measured according to ASTM D2414. Acetylene black is a generally acknowledged term and are very well known and e.g. supplied by Denka.

According to the invention the gel count in the plastomer, as defined in methods under gel check, for gels above 1000 $\mu$m is below 100 gels/kg, suitably the gel count for gels above 1000 $\mu$m is below 50 gels/kg. The expression above 1000 $\mu$m means that all gels above this size are added together. Either is the number of gel measured directly on the plastomer or is the number of gel measured on each fraction and summarised based on each plastomer weight fraction.

It has surprisingly been found that the plastomers conventionally contain a high amount of gels. This is contradictory to the nature of plastomers that per definition has very low amount of crystallinity. By selecting a plastomer based on these criteria, can an even smoother semicon layer be optioned extruded.

Another object of the invention is better dispersion of the carbon black. The lack of gels will enable better uniform dispersion of the carbon black and improve processability.

In a more suitable embodiment of the invention the gel count in the plastomer, as defined in methods, for gels above 600 $\mu$m is below 500 gels/kg, suitably the gel count for gels above 600 $\mu$m is below 200 gels/kg. The expression above 600 $\mu$m means that all gels above this size are added together.

In a more suitable embodiment the gel count in the plastomer, as defined in methods, for gels above 300 $\mu$m is below 2000 gels/kg, suitably is the gel count for gels above 300 $\mu$m is below 1000 gels/kg. The expression above 300 $\mu$m means that all gels above this size are added together.

In another embodiment the plastomer is prepared with at least one single site catalyst. The plastomer may also be prepared with more than one single site catalyst or may be a blend of multiple plastomer prepared with different single site catalysts. In some embodiments, the plastomer is a substantially linear ethylene polymer (SLEP). SLEPs and other metallocene catalysed plastomers are known in the art, for example, US 5,272,236. These resins are also commercially available, for example, as Queo™ plastomers available from Borealis, Engage plastomer resins available from Dow Chemical Co.

By conducting polymerisation in the presence of a single site polymerisation catalyst said single site plastomer is produced. The single site catalyst may suitably be a metallocene catalyst. Such catalysts comprise a transition metal compound which contains a cyclopentadienyl, indenyl or fluorenyl ligand. The catalyst contains, e.g., two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups and like. Suitable metallocene compounds are known in the art and are disclosed, among others, in WO-A-97/28170, WO-A-98/32776, WO-A-99/61489, WO-A-03/010208, WO-A-03/051934, WO-A-03/051514, WO-A-2004/085499, EP-A-1752462 and EP-A-1739103.

In one embodiment of the invention the semiconductive polyethylene composition according to any previous embodiments wherein the semiconductive polyethylene composition suitably has less than 5 pips/m$^2$ that are >0.150mm, as defined in methods. This enables the semiconductive polyethylene composition to withstand higher electrical fields, i.e. it can be used in cable constructions with high voltages. It further enables the semiconductive polyethylene composition to be used in DC cables with high voltages.

In a further suitable embodiment the semiconductive polyethylene composition is crosslinkable via radical initiated crosslinking reaction. The semiconductive polyethylene composition comprises a cross-linking agent, suitably peroxide in an amount of 0.1 to 8 wt% of the semiconductive polyethylene composition, more suitably of from 0.1 to 5 wt%. Suitable peroxides for cross-linking are di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxyisopropyl)benzene, butyl-4,4-bis(tert-butylperoxy)valerate, 1,1-bis(tert-butylperoxy)-3,3,5-trimethylcyclohexane, tert-butylperoxybenzoate, dibenzoylperoxide.

Said semiconductive polyethylene composition may comprise further components, typically additives, such as antioxidants, crosslinking boosters, scorch retardants, processing aids, fillers, coupling agents, ultraviolet absorbers, stabilisers, antistatic agents, nucleating agents, slip agents, plasticizers, lubricants, viscosity control agents, tackifiers, anti-blocking agents, surfactants, extender oils, acid scavengers and/or metal deactivators. The content of said additives may preferably range from 0 to 8 wt%, based on the total weight of the semiconductive polyethylene composition.

Examples of such antioxidants are as follows, but are not limited to: hindered phenols such as tetrakis [methylene(3,5-di-tert-butyl-4-hydroxyhydrocinnamate)]methane; bis[(beta-(3,5-ditert-butyl-4-hydroxybenzyl)-methylcarboxyethyl)]sulphide, 4,4'-thiobis(2-methyl-6- tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl- phosphonite; thio compounds such as dilaurylthiodipropionate, dimyristylthiodipropionate, and distearylthiodipropionate; various siloxanes; polymerised 2,2,4-trimethyl-1,2-dihydroquinoline, n,n'-bis(1,4-dimethylpentyl-p-phenylenediamine), alkylated diphenylamines, 4,4'-bis(alpha,alphadimethylbenzyl)diphenylamine, diphenyl-p-phenylenediamine, mixed di-aryl-p-phenylenediamines, and other hindered amine antidegradants or stabilisers. Antioxidants can be used in amounts of about 0.1 to about 5 percent by weight based on the total weight of the semiconductive polyethylene composition.

Examples of further fillers as additives are as follows: clays, precipitated silica and silicates, fumed silica, calcium carbonate, ground minerals, and further carbon blacks. Fillers can be used in amounts ranging from less than about 0.01 to more than about 50 wt% based on the weight of the composition.

The invention further relates to a cable comprising at least one semiconducting layer comprising the semiconductive polyethylene composition according to any previous embodiment. The cable suitably comprises an inner semiconductive layer, an insulation layer and an outer semiconductive layer, in that order. The cables is suitably produced by extruding the layers on a conductor and subsequently covered with at least one jacketing layer. In a more suitable embodiment the at least the inner semiconducting layer comprises the semiconductive polyethylene composition or even more suitable both inner and outer semiconducting layers comprises the semiconductive polyethylene composition. In an even more suitable embodiment is the cable a DC cable, suitably HVDC cable.

**Test methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene if nothing else is stated. MFR may be determined at different loadings such as 2.16 kg ($MFR_2$) or 21.6 kg ($MFR_{21}$).

**Density**

The density of the polymers was measured according to ISO 1183. The sample preparation was executed according to ISO 1872-2 Table 3 Q (compression moulding).

**Gel check - Measurement of gel count in transparent tapes**

The gel count was measured with a gel counting apparatus consisting of a measuring extruder, Dr Collin E25, 25*25D, with five temperature conditioning zones adjusted to a temperature profile of 130/140/160/160/160 °C), an adapter and a slit die (with an opening of 0.3 * 100 mm). Attached to this were a chill roll unit (with a diameter of 22 cm with a temperature set of 50 °C), a line camera (TDI 2048 * 96 pixel for dynamic digital processing of grey tone images) and a winding unit.

For the gel count content measurements the materials were extruded at a screw speed of 30 rounds per minute, a drawing speed of 70 mm per second and a chill roll temperature of 50 °C to make thin cast films with a thickness of 70 $\mu$m and a width of 60 mm.

For each material the average number of gel dots on a film surface of 0.3 kg was detected by the line camera. The line camera was set to differentiate the gel dot size according to the following:

Gel size

100 $\mu$m to 300 $\mu$m

300 $\mu$m to 600 $\mu$m

600 $\mu$m to 1000 $\mu$m

above 1000 $\mu$m

**Surface smoothness analysis (SSA) method**

The general definitions for the surface smoothness properties of the semiconductive polymer composition of the invention as given above and below in the claims, as well as given in the examples below were determined using the sample and determination method as described below.

For illustrative purposes a schematic overview of the test apparatus is provided in Figure 1, in US6594015. Herein, a tape 1 consisting of the semiconductive polymer composition passes over a rod 2 at a given speed and a light beam 3 coming from the light source 4 passes over the tape 1 and this light beam 3 is captured by the camera 5. When there is a particle 7 protruding from the surface of the tape 1, the light beam 3 will be altered, which alteration will be recorded by the camera 5. From this recording by the camera 5 it is possible to calculate the height and the width of the particle protruding from the surface of the tape. In this manner the amount, height and width of the particles present in the tape can be measured.

This method is used to determine the surface smoothness, i.e. the particles protruding outwards from the surface and thus causing the roughness of the tape surface. It indicates the smoothness of a polymer layer on a cable produced by (co)extrusion. The method detects and measures the width of a protruding particle at the half height of said protrusion thereof from the surface of the tape. The test system is further generally described e.g. in US6594015.

**(i) Tape sample preparation**

About 4 kg of pellets of a semiconductive polyethylene composition were taken and extruded into a tape sample using Collin single screw of 20 mm and 25D extruder (supplier Collin) and following temperature settings at different sections, starting from the inlet of the extruder: 95/120/120/125 °C to obtain a temperature of 125 °C of the polymer melt. The pressure before the extrusion plate is typically 260 bar, residence time is kept between 1 and 3 minutes and typical screw speed is 50 rpm, depending on the polymer material as known for a skilled person. Extruder die opening: 50 mm * 1 mm, Thickness of the tape: 0.5 mm +/- 10 $\mu$m, Width of the tape: 20 mm +/- 2 mm.

The tape is cooled with air to solidify it completely before subjecting it to a camera-scanning (detection) zone of the SSA-instrument which locates at a distance of 50 cm from the outlet of die. The measurement area: Camera of SSA-instrument scans the tape surface while the tape moves with a given speed. The scanning width is set to exclude the edge area of the tape. The scanning is effected on along the tape to correspond to a measurement area of 1 m$^2$. Further details are given below.

**(ii) SSA determination of the tape sample**

The test is based on an optical inspection of the obtained extruded tape that is passed in front of an optical scanner able to scan even a large surface at high speed and with good resolution. The SSA-instrument is fully computerised and during the operation it automatically stores information about positions and sizes of pips found for statistical evaluation. "Pip" means herein a smaller burl with a height at least one order of magnitude higher than the surrounding background roughness. It is standing alone and the number per surface area is limited.

Height is the distance between the base line (=surface of the tape) and the highest point of a pip. Half height is defined as the width of the pip at 50 % of its height (W50) measured from the baseline. For the half height measurement the surface of the tape sample is taken as the baseline. Pip is referred herein above and below as a "particle protruding from the surface of the tape". And thus the "half height of said particle protruding from the surface of the tape sample" as used herein in the description and claims is said half height width (W50). The instrument was a SSA-analysing instrument from of OCS GmbH in Germany.

Hardware: PC via Image Pre Processor
Software: NOPINIT
Camera type: spectrophotograph camera from Dalsa with 2048 pixels, on-line camera with line frequency of 5000.
Light source: intensity regulated red LED,
The width resolution of the pip (particle): 10 $\mu$m,
The height resolution of the pip (particle): 1.5 $\mu$m.

Tape speed in SSA-instrument: 50 mm/s. The horizon of tape surface is created of a rotating metal shaft. The light source and camera are directly aligned with no angel with a focal point on the horizon.

The scanning results are for 1 m$^2$ of tape and expressed as
-number of particles per m$^2$ having a width larger than 150 $\mu$m at a half height of said article protruding from the tape surface (= baseline),
The given values represent an average number of particles obtained from 10 tape samples prepared and analysed for a semiconductive composition under determination.

It is believed that when using the above principles the SSA-method can be performed using another camera and set up-system provided the particle sizes given in description and claims can be detected and height at half width determined with corresponding accuracy, would result in the same results as the above reference SSA-method.

**Comonomer content:**

The content (wt% and mol%) of polar comonomer present in the polymer and the content (wt% and mol%) of silane groups containing units (preferably comonomer) present in the polymer composition (preferably in the polymer): Quantitative nuclear-magnetic resonance (NMR) spectroscopy was used to quantify the comonomer content of the polymer in the polymer composition.

Quantitative 1H NMR spectra recorded in the solution-state using a Bruker Advance III 400 NMR spectrometer operating at 400.15 MHz. All spectra were recorded using a standard broad-band inverse 5 mm probehead at 100°C using nitrogen gas for all pneumatics. Approximately 200 mg of material was dissolved in 1,2-tetrachloroethane-d2 (TCE-d2) using ditertiarybutylhydroxytoluen (BHT) (CAS 128-37-0) as stabiliser. Standard single-pulse excitation was employed utilising a 30 degree pulse, a relaxation delay of 3 s and no sample rotation. A total of 16 transients were acquired per spectra using 2 dummy scans. A total of 32k data points were collected per FID with a dwell time of 60 $\mu$s, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methylacrylate and vinyltrimethylsiloxane copolymerisation when present in the same polymer.

Quantitative 1H NMR spectra were processed, integrated and quantitative properties determined using custom spectral analysis automation programs. All chemical shifts were internally referenced to the residual protonated solvent signal at 5.95 ppm.

When present characteristic signals resulting from the incorporation of vinylacytate (VA), methyl acrylate (MA), butylacrylate (BA) and vinyltrimethylsiloxane (VTMS), in various comonomer sequences, were observed (Randell89). All comonomer contents calculated with respect to all other monomers present in the polymer.

The vinylacytate (VA) incorporation was quantified using the integral of the signal at 4.84 ppm assigned to the *VA sites, accounting for the number of reporting nuclie per comonomer and correcting for the overlap of the OH protons from BHT when present:

$$VA = ( I*VA - (IArBHT)/2) / 1$$

The methylacrylate (MA) incorporation was quantified using the integral of the signal at 3.65 ppm assigned to the 1MA sites, accounting for the number of reporting nuclie per comonomer:

$$MA = I1MA / 3$$

The butylacrylate (BA) incorporation was quantified using the integral of the signal at 4.08 ppm assigned to the 4BA sites, accounting for the number of reporting nuclie per comonomer:

$$BA = I4BA / 2$$

The vinyltrimethylsiloxane incorporation was quantified using the integral of the signal at 3.56 ppm assigned to the 1VTMS sites, accounting for the number of reporting nuclei per comonomer:

$$VTMS = I1VTMS / 9$$

Characteristic signals resulting from the additional use of BHT as stabiliser, were observed. The BHT content was quantified using the integral of the signal at 6.93 ppm assigned to the ArBHT sites, accounting for the number of reporting nuclei per molecule:

$$BHT = IArBHT / 2$$

The ethylene comonomer content was quantified using the integral of the bulk aliphatic (bulk) signal between 0.00 - 3.00 ppm. This integral may include the 1VA (3) and $\alpha$VA (2) sites from isolated vinylacetate incorporation, *MA and $\alpha$MA sites from isolated methylacrylate incorporation, 1BA (3), 2BA (2), 3BA (2), *BA (1) and $\alpha$BA (2) sites from isolated butylacrylate incorporation, the *VTMS and $\alpha$VTMS sites from isolated vinylsilane incorporation and the aliphatic sites from BHT as well as the sites from polyethylene sequences. The total ethylene comonomer content was calculated based on the bulk integral and compensating for the observed comonomer sequences and BHT:

$$E = (1/4)*[ \, Ibulk - 5*VA - 3*MA - 10*BA - 3*VTMS - 21*BHT \, ]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M \, / \, ( \, E + VA + MA + BA + VTMS \, )$$

The total comonomer incorporation of a given monomer (M) in mole percent was calculated from the mole fractions in the standard manner:

$$M \, [mol\%] = 100 * fM$$

The total comonomer incorporation of a given monomer (M) in weight percent (wt%) was calculated from the mole fractions and molecular weight of the monomer (MW) in the standard manner:

$$M \, [wt\%] = 100 * ( \, fM * MW) \, / \, ( \, (fVA * 86.09) + (fMA * 86.09) + (fBA * 128.17) +$$
$$(fVTMS * 148.23) + ((1-fVA-fMA-fBA-fVTMS) * 28.05) \, )$$

randall89
J. Randall, Macromol. Sci., Rev. Macromol. Chem. Phys. 1989, C29, 201.

It is evident for a skilled person that the above principle can be adapted similarly to quantify content of any further polar comonomer(s) which is other than MA BA and VA, if within the definition of the polar comonomer as given in the present application, and to quantify content of any further silane groups containing units which is other than VTMS, if within the definition of silane groups containing units as given in the present application, by using the integral of the respective characteristic signal.

**Materials**

Queo 0210 is a single site catalyst solution polymerised polyethylene plastomer that is commercially available from Borealis AG. The QUEO 0210 is a very low density polyethylene (1-octene as the comonomer) with an MFR$_2$ of 10 g/10min (190 °C /2.16 kg) and a density of 902 kg/m$^3$.

Queo 0230 is a single site catalyst solution polymerised polyethylene that is commercially available from Borealis AG. The QUEO 0230 is a very low density polyethylene (1-octene as the comonomer) with an MFR$_2$ of 30 g/10min (190 °C /2.16 kg) and a density of 902 kg/m$^3$.

QUEO 8230 is a single site catalyst solution polymerised polyethylene that is commercially available from Borealis AG. The QUEO 8230 is a very low density polyethylene (1-octene as the comonomer), has an MFR$_2$ of 30 g/10min (190 °C /2.16 kg) and a density of 882 kg/m$^3$.

Queo 2M137 is a single site catalyst solution polymerised polyethylene that is commercially available from Borealis AG. The QUEO 2M137 is a very low density polyethylene (1-octene as the comonomer), has an MFR$_2$ of 1 g/10min (190 °C /2.16 kg) and a density of 870 kg/m$^3$.

Non-polar ethylene-butene-copolymer (Borstar technology) is produced in the Borstar technology as described in EP1634913. The material is a bimodal polymer produced in a dual reactor, low pressure process. The MFR$_2$ is 2.6 g/lOmin and the density of 912 kg/m$^3$.

EBA 17wt% is an ethylene copolymer with 17wt% of a comonomer of butylacrylate and is produced in a high pressure radical process. The $MFR_2$ is 7 g/10min and the density of 926 kg/m$^3$.

EBA 14wt% is an ethylene copolymer with 14wt% of a comonomer of butylacrylate and is produced in a high pressure radical process. The $MFR_2$ is 18 g/10min and the density of 924 kg/m$^3$.

Denka black is an acetylene conductive carbon black that is commercially available from Denka with the properties of high cleanliness and very good conductivity.

TMQ is a polymer of 2,2,4-trimethyl-1,2-dihydroquinoline, commercially available from Lanxess.

**Examples**

**Pressure of inner semicon during cable extrusion**

The construction of the cables is 50 mm$^2$ stranded Al-conductor and 5.5 mm thick insulation. The inner and outer semiconductive layers have a thickness of 0.9 and 0.8 mm, respectively. The cable line is a 1+2 system, thus one extrusion head for the inner semicon (semicon is used as an abbreviation for a semiconductive layer in a cable), and another for the insulation + outer semicon. The pressure of the molten semiconductive composition before the screen pack in the extruder during production of cables is noted. The materials were extruded on a 45 mm Maillefer extruder with a temperature profile of 75/105/110/120/130/130/130 °C profile at a line speed of 1.6 m/min.

Table 1 - Processability of semiconductive polyethylene compositions.

|  | Unit | Comparative example 2 | Inventive example 1 |
|---|---|---|---|
| Nonpolar ethylene-octene copolymer with a density of 897kg/m$^3$ and an $MFR_2$ of 1.6g/10min, Engage 8440 available from DOW | wt% | 24.54 |  |
| Nonpolar ethylene-octene copolymer with an density of 885kg/m3 and an $MFR_2$ of 30g/10min, Engage 8401 available from DOW | wt% | 36.81 |  |
| Queo 0230 | wt% |  | 50.7 |
| Queo 2M137 | wt% |  | 12.4 |
| EBA 17wt% | wt% |  | 5.25 |
| EBA 14wt% |  | 5 |  |
| TMQ | wt% | 0.65 | 0.65 |
| Denka Black | wt% | 33 | 31 |
| Melt pressure of inner semicon during cable extrusion | Bar | 165 | 150 |

The inventive sample shows a lower melt pressure compared to the comparative example. As can be remembered from Table 1 the base resin used in the comparative example have a much higher gel count content compared to the base resins in the inventive example. With the increased number of gels a higher percentage of the comparative formulation will interact with the melt screen in the extruder, leading to the higher noted pressure compared to the inventive example.

Samples of various base resin are prepared and measured according to gel count content measurement.

Table 2 - Gel count in base resin/kg

| Component | Base Resin | Gel-Check | | | |
|---|---|---|---|---|---|
|  |  | 100-300$\mu$m | 300-600$\mu$m | 600-1000$\mu$m | 1000-$\mu$m |
| Inventive | Queo 0210 | 103 | 50 | 7 | 0 |
|  | Queo 2M137 | 1527 | 305 | 96 | 27 |
|  | Queo 8201 | 432 | 220 | 89 | 46 |
|  | Queo 0230 | 440 | 157 | 13 | 0 |

(continued)

| Component | Base Resin | Gel-Check | | | |
|---|---|---|---|---|---|
| Comparative | Non-polar ethylene-butene-copolymer (Borstar technology) | 338454 | 69110 | 5893 | 621 |

As it can be seen from the Table 2 there is a big variance in the number of gels in the different materials regarding the number of gels.

**Compounding of semiconductive examples**

All examples of semiconductive polyethylene composition were compounded on a Busskneader MK. The compounding were done according to the steps of

∘ i) introducing base resins and TMQ in a mixer device and mixing the polymer component and additives at elevated temperature such that a polymer melt is obtained;

∘ ii) adding the carbon black to the polymer melt and further mixing of the polymer melt.

Table 3 - Surface smoothness analysis (SSA) of the semiconductive compound reported as pips per $m^2$

| | | Inventive 1 | Inventive 2 |
|---|---|---|---|
| Component | Function | | |
| Queo 0230 | Plastomer | | 50.7 |
| Queo 2M137 | Plastomer | | 12.4 |
| Queo 0210 | Plastomer | 63 | |
| EBA 17wt% | Polar ethylene copolymer | 5 | 5.25 |
| TMQ | Antioxidant | 0.65 | 0.65 |
| Denka Black | Conductive filler | 31 | 31 |
| $MFR_{21}$ measured at 125°C | | | 3.6 |
| SSA | | | |
| SSA > 0.150 mm | | 1.91 | 4.3 |

As can be seen in Table 3, the inventive examples using a higher content of base resin having high MFR results in a smooth semiconductive material.

The compositions of inventive example 2 are bleed out on a 60 mm Maillefer tripplehead extruder. A 80 mesh melt screen was used to remove eventual contaminants in the melt. With bleed out means that no conductor was used and only the polymer melt is extruded from the cable extruder.

Table 4 - Processability of semiconductive polyethylene compositions.

| | | Melt Temperature | Melt pressure | | Output |
|---|---|---|---|---|---|
| Material | | Extrudate | p1 | p2 | |
| | (Rpm) | (°C) | (bar) | (bar) | (Kg/h) |
| Inventive 2 | 15 | 126.4 | 313 | 226 | 16.93 |
| | 20 | 127.8 | 339 | 246 | 22.49 |
| | 25 | 129.1 | 362 | 263 | 28.69 |
| | 40 | 136.7 | 407 | 298 | 48.35 |

The RPM values are relevant for the size of the extruder used and it can be seen that the melt pressure is decreased for the formulation with lower gel count content. This is due to gels will be filtered in the melt screen. P1 and P2 in Table 4 mean the pressure before and after the die.

**Claims**

1. A semiconductive polyethylene composition comprising

   a. a very low density polyolefin, having a density of less than or equal to 910 kg/m$^3$,
   b. an amount of at least 20 wt% of carbon black,

   wherein said polyolefin comprises:

   i. a first polyolefin fraction with density in the range of 885 to 920 kg/m$^3$ and MFR$_2$ in the range of 15 to 50 g/10min,
   ii. a second polyolefin fraction with density in the range of 840 to 880 kg/m$^3$ and MFR$_2$ in the range of 0.5 to 10 g/10min,

   and the amounts of the first and second fraction of polyolefin are present in an amount of at least 10 wt% of the polyolefin.

2. The semiconductive polyethylene composition according to claim 1 wherein

   a. the polyolefin comprises:

   i. a first polyolefin fraction with density of in the range 890 to 910 kg/m$^3$ and MFR$_2$ in the range of 20 to 40 g/10min,
   ii. a second polyolefin fraction with density of 860 to 875 kg/m$^3$ and MFR$_2$ in the range of 0.5 to 5 g/10min.

3. The semiconductive polyethylene composition according to claim 1 or 2 wherein the amount of polyolefin in the semiconductive polyethylene composition is from 40 to 75 wt% of the semiconductive polyethylene composition.

4. The semiconductive polyethylene composition according any previous claim wherein the polyolefin has a MFR$_2$ in the range of 5 to 25 g/10min.

5. The semiconductive polyethylene composition according any previous claim wherein the semiconductive polyethylene composition comprises an ethylene polar copolymer.

6. The semiconductive polyethylene composition according to any previous claim wherein the MFR$_2$ of the polyolefin and the ethylene polar copolymer differ less than 15 g/10min.

7. The semiconductive polyethylene composition according to any previous claim wherein the ethylene polar copolymer has an MFR$_2$ in the range of 5 to 50 g/10min.

8. The semiconductive polyethylene composition to any previous claim wherein the polyethylene composition comprises an amount of 30 to 45 wt% of carbon black.

9. The semiconductive polyethylene composition according to any previous claim wherein the gel count in the polyolefin, as defined in methods, for above 1000 $\mu$m is below 100 gels/kg.

10. The semiconductive polyethylene composition according to any previous claim wherein the semiconductive polyethylene composition has less than 5 pips/m$^2$ that are >0.150 mm, as defined in methods.

11. A cable comprising at least one semiconducting layer comprising the semiconductive polyethylene composition according to any previous claim.

12. The cable according to claim 11 wherein the at least one semiconducting layer is the inner semiconducting layer.

13. The cable according to claim 11 or 12 wherein said cable is a DC cable.

**Patentansprüche**

1. Halbleitende Polyethylen-Zusammensetzung, umfassend

   a. ein Polyolefin sehr niedriger Dichte mit einer Dichte von weniger als oder gleich 910 kg/m$^3$
   b. eine Menge von mindestens 20 Gew.-% Ruß,

   wobei das Polyolefin umfasst:

   i. eine erste Polyolefin-Fraktion mit einer Dichte im Bereich von 885 bis 920 kg/m$^3$ und MFR$_2$ im Bereich von 15 bis 50 g/10 min,
   ii. eine zweite Polyolefin-Fraktion mit einer Dichte im Bereich von 840 bis 880 kg/m$^3$ und MFR$_2$ im Bereich von 0,5 bis 10 g/10 min,

   und die Mengen der ersten und zweiten Fraktion an Polyolefin in einer Menge von mindestens 10 Gew.-% des Polyolefins vorliegen.

2. Halbleitende Polyethylen-Zusammensetzung nach Anspruch 1, wobei

   a. das Polyolefin umfasst:

   i. eine erste Polyolefin-Fraktion mit einer Dichte im Bereich von 890 bis 910 kg/m$^3$ und MFR$_2$ im Bereich von 20 bis 40 g/ 10 min,
   ii. eine zweite Polyolefin-Fraktion mit einer Dichte von 860 bis 875 kg/m$^3$ und MFR$_2$ im Bereich von 0,5 bis 5 g/10 min.

3. Halbleitende Polyethylen-Zusammensetzung nach Anspruch 1 oder 2, wobei die Menge an Polyolefin in der halbleitenden Polyethylen-Zusammensetzung 40 bis 75 Gew.-% der halbleitenden Polyethylen-Zusammensetzung beträgt.

4. Halbleitende Polyethylen-Zusammensetzung nach einem vorangehenden Anspruch, wobei das Polyolefin eine MFR$_2$ im Bereich von 5 bis 25 g/10 min aufweist.

5. Halbleitende Polyethylen-Zusammensetzung nach einem vorangehenden Anspruch, wobei die halbleitende Polyethylen-Zusammensetzung ein polares Ethylen-Copolymer umfasst.

6. Halbleitende Polyethylen-Zusammensetzung nach einem vorangehenden Anspruch, wobei sich die MFR$_2$ des Polyolefins und des polaren Ethylen-Copolymers weniger als 15 g/10 min unterscheiden.

7. Halbleitende Polyethylen-Zusammensetzung nach einem vorangehenden Anspruch, wobei das polare Ethylen-Copolymer eine MFR$_2$ im Bereich von 5 bis 50 g/10 min aufweist.

8. Halbleitende Polyethylen-Zusammensetzung nach einem vorangehenden Anspruch, wobei die Polyethylen-Zusammensetzung eine Menge von 30 bis 45 Gew.-% Ruß umfasst.

9. Halbleitende Polyethylen-Zusammensetzung nach einem vorangehenden Anspruch, wobei die Gelanzahl im Polyolefin, wie in den Verfahren definiert, für über 1000 μm unter 100 Gele/kg liegt.

10. Halbleitende Polyethylen-Zusammensetzung nach einem vorangehenden Anspruch, wobei die halbleitende Polyethylen-Zusammensetzung weniger als 5 Pips/m$^2$ aufweist, die >0,150 mm sind, wie in den Verfahren definiert.

11. Kabel, umfassend mindestens eine halbleitende Schicht, umfassend die halbleitende Polyethylen-Zusammensetzung nach einem vorangehenden Anspruch.

12. Kabel nach Anspruch 11, wobei die mindestens eine halbleitende Schicht die innere halbleitende Schicht ist.

13. Kabel nach Anspruch 11 oder 12, wobei das Kabel ein Gleichstromkabel ist.

**Revendications**

1. Composition de polyéthylène semi-conductrice comprenant

   a. une polyoléfine très basse densité, ayant une masse volumique inférieure ou égale à 910 kg/m$^3$,
   b. une quantité d'au moins 20 % en poids de noir de carbone,

   dans laquelle ladite polyoléfine comprend :

   i. une première fraction de polyoléfine ayant une masse volumique dans la plage de 885 à 920 kg/m$^3$ et un MFR$_2$ dans la plage de 15 à 50 g/10 min,
   ii. une deuxième fraction de polyoléfine ayant une masse volumique dans la plage de 840 à 880 kg/m$^3$ et un MFR$_2$ dans la plage de 0,5 à 10 g/10 min,

   et les quantités des première et deuxième fractions de polyoléfine sont présentes en une quantité d'au moins 10 % en poids de la polyoléfine.

2. Composition de polyéthylène semi-conductrice selon la revendication 1, dans laquelle

   a. la polyoléfine comprend :

   i. une première fraction de polyoléfine ayant une masse volumique dans la plage de 890 à 910 kg/m$^3$ et un MFR$_2$ dans la plage de 20 à 40 g/10 min,
   ii. une deuxième fraction de polyoléfine ayant une masse volumique dans la plage de 860 à 875 kg/m$^3$ et un MFR$_2$ dans la plage de 0,5 à 5 g/10 min.

3. Composition de polyéthylène semi-conductrice selon la revendication 1 ou 2, dans laquelle la quantité de polyoléfine dans la composition de polyéthylène semi-conductrice est de 40 à 75 % en poids de la composition de polyéthylène semi-conductrice.

4. Composition de polyéthylène semi-conductrice selon l'une quelconque des revendications précédentes, dans laquelle la polyoléfine a un MFR$_2$ dans la plage de 5 à 25 g/10 min.

5. Composition de polyéthylène semi-conductrice selon l'une quelconque des revendications précédentes, dans laquelle la composition de polyéthylène semi-conductrice comprend un copolymère polaire d'éthylène.

6. Composition de polyéthylène semi-conductrice selon l'une quelconque des revendications précédentes, dans laquelle les MFR$_2$ de la polyoléfine et du copolymère polaire d'éthylène diffèrent de moins de 15 g/10 min.

7. Composition de polyéthylène semi-conductrice selon l'une quelconque des revendications précédentes, dans laquelle le copolymère polaire d'éthylène a un MFR$_2$ dans la plage de 5 à 50 g/10 min.

8. Composition de polyéthylène semi-conductrice selon l'une quelconque des revendications précédentes, dans laquelle la composition de polyéthylène comprend une quantité de 30 à 45 % en poids de noir de carbone.

9. Composition de polyéthylène semi-conductrice selon l'une quelconque des revendications précédentes, dans laquelle le compte de gels dans la polyoléfine, tel que défini dans les méthodes, pour plus de 1000 μm est inférieur à 100 gels/kg.

10. Composition de polyéthylène semi-conductrice selon l'une quelconque des revendications précédentes, dans laquelle la composition de polyéthylène semi-conductrice a moins de 5 pépins/m$^2$ qui sont > 0,150 mm, comme défini dans les méthodes.

11. Câble comprenant au moins une couche semi-conductrice comprenant la composition de polyéthylène semi-conductrice selon l'une quelconque des revendications précédentes.

12. Câble selon la revendication 11, dans lequel l'au moins une couche semi-conductrice est la couche semi-conductrice intérieure.

**13.** Câble selon la revendication 11 ou 12, dans lequel ledit câble est un câble pour courant continu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1634913 A
- EP 1978040 A
- US 5556697 A
- EP 2532011 A
- WO 9212182 A
- US 4340577 A
- US 5272236 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- US 6594015 B

**Non-patent literature cited in the description**

- **J. RANDALL.** *Macromol. Sci., Rev. Macromol. Chem. Phys.,* 1989, vol. C29, 201